# EUROPEAN PATENT APPLICATION

(11) **EP 1 281 546 A1**
(43) Date of publication of application: **05.02.2003**
(21) Application number: 02701649.2
(22) Date of filing: 28.02.2002
(51) Int. Cl.: B60J 1/17

(54) **WINDOW GLASS FOR CAR AND METHOD OF RECYCLING THE WINDOW GLASS**

(30) Priority: 02.03.2001 JP 2001059100
(71) Applicant: ASAHI GLASS COMPANY LTD., Tokyo 100-8405 (JP)
(72) Inventor: KAWATA, Shinichi c/o Asahi Glass Company, Limited, Toyota-shi, Aichi 471-0064 (JP); ITO, Shinichiro, Nishikamo-gun, Aichi 470-0205 (JP)
(74) Representative: Müller-Boré & Partner Patentanwälte
(86) International application number: JP0201877
(87) International publication number: WO02070293

(57) **Abstract**

A window glass for an automobile, comprising a glass plate in which a through hole is formed in its peripheral portion and a resin holder which is formed integrally with the glass plate so as to fill the through hole and which clamps the glass plate, is presented. The window glass for an automobile can be produced in a relatively short time; can reduce the size of the holder and allows resource recycling of the window glass.

## Description

### TECHNICAL FIELD

The present invention relates to a window glass for an automobile having a holder connectable to an elevating device and a glass recycling method for regenerating the glass plate for a window glass for an automobile.

### BACKGROUND ART

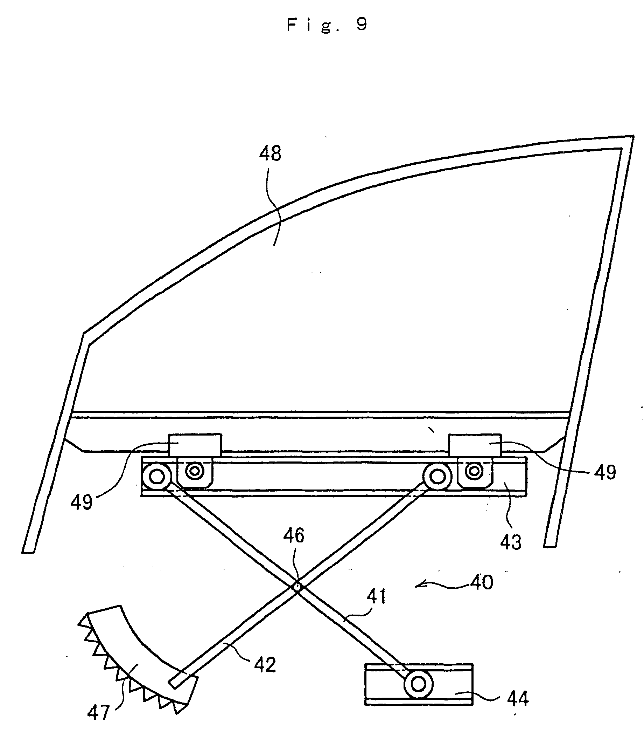

A door for an automobile is provided with a window glass capable of being opened and closed and an elevating device for elevating the window glass. The elevating device includes so-called arm type regulator and wire type regulator. Fig. 9 shows an example of the elevating device called the arm type regulator. An elevating device 40 comprises two arms 41, 42, an elevating rail 43, a fixed rail 44, a regulator (not shown) and so on. In more detail, the two arms 41, 42 are connected by a shaft as a fulcrum point 46 around which they are rotated each other. Upper ends of arms 41, 42 are attached to the elevating rail 43 so as to be capable of sliding. A lower end of an arm 41 is attached to the fixed rail 44 so as to be capable of sliding, and a lower end of an arm 42 is connected to the main body of a regulator (not shown) by means of a gear wheel 47. Namely, the gear wheel 47 is driven by the regulator whereby the elevating rail 43 is moved upward.

A glass plate 48 is connected to the elevating rail 43 by means of two holders 49. The holders 49 are made of polyacetal resin including glass fibers and are bonded to positions in the vicinity of a lower side of the glass plate by using a urethane adhesive after primer has been coated on the glass plate 48 and the holders 49.

In the structure described above, the primer had to be applied to the glass plate 48 and the holders 49 in order to assure the bonding strength of the holders 49. For this, a primer application process and a drying process were needed, and it took a relatively long time until the adhesive was cured. Further, in order to assure the bonding strength, a sufficient area of contact between the holders 49 and the glass plate 48 had to be provided. This affected an increase of the size and weight of the holders 49.

JP-Y-4-22989 publication (referred to as '989 publication) discloses that a resin holder is formed integrally with a peripheral portion of a glass plate by injection molding. According to the '989 publication, the above-mentioned problem can be solved because the resin holder is formed integrally with the peripheral portion of the glass plate by injection molding.

However, since the bonding area of the resin holder to the glass plate is small, the bonding strength of the resin holder to the glass plate is small. In particular, the resin holder is applied with a force in a direction of coming-off from the glass plate due to a force from the elevating device because an elevating direction of the glass plate by the elevating device is substantially coincidence with the direction of the surface of the glass plate. Accordingly, it is undesirable that the bonding strength of the resin holder to the glass plate is small.

Accordingly, it is considered to apply a primer treatment and an appropriate adhesive to the glass plate when the resin holder is formed integrally with the peripheral portion of the glass plate by injection molding. However, such primer treatment and the application of an adhesive cause the following disadvantage.

Namely, from the viewpoint of recycling resources in recent years, the recycling of glass plates for automobile windows is expected. If primer or an adhesive adheres on a glass plate, it is difficult to separate glass from these materials. Accordingly, the used window glass has to be scrapped. Such disadvantage occurs similarly even in a case of the resin holder formed integrally by injection molding.

Further, a window glass to which a water-repellent treatment is conducted to a surface of the glass plate is sometimes used in recent years. When the water-repellent treatment is conducted to the glass plate, there causes difficulty in the adhering of primer or an adhesive on the glass plate. Accordingly, when the water-repellent treatment is conducted to the glass plate, masking has to be conducted to the glass plate at the position where the resin holder is to be bonded.

In view of the above-mentioned circumstances, it is an object of the present invention to provide a window glass for an automobile, which can be produced in a relatively short time while use of primer or an adhesive is unnecessary; can reduce the size of a holder and allows resource recycling for the window glass, and a glass recycling method for regenerating the glass plate of a window glass for an automobile.

### DISCLOSURE OF THE INVENTION

In accordance with the present invention, there is provided a window glass for an automobile comprising a glass plate for an automobile and a resin holder for connecting the glass plate to an elevating device for elevating the glass plate wherein the glass plate is capable of being elevated by means of the elevating device, the window glass for an automobile being characterized in that an opening or aperture is formed in a peripheral portion of the glass plate and the resin holder is formed integrally with the peripheral portion including the opening or aperture of the glass plate by injection molding.

Further, in accordance with the present invention, there is provided a window glass for an automobile comprising a glass plate for an automobile and a resin holder for connecting the glass plate to an elevating device for elevating the glass plate wherein the glass plate is capable of being elevated by means of the elevating device, the window glass for an automobile being characterized in that a projection is formed in a peripheral portion of at least one of glass plate surfaces and the resin holder is formed integrally with the peripheral portion including the projection of the glass plate by injection molding.

As described above, according to the window glass for an automobile of the present invention, the opening or aperture or a projection is formed in a peripheral portion of the glass plate at a position where the resin holder is formed. Then, the resin holder is formed integrally with the glass plate by injection molding. In more detail, the peripheral portion of the glass plate including the opening or aperture or the projection is clamped by molding dies in which an engraved portion corresponding to the shape of the resin holder is formed. A cavity is formed around the peripheral portion of the glass plate in association with the molding dies. A resin material is injected into the cavity and the injected material is solidified whereby the resin holder is formed so as to clamp the peripheral portion of the glass plate. The opening means a portion opened in a surface of the glass plate, such as a recess from the glass plane, a curved notch or the like, and the aperture means a through hole.

When the opening or aperture is formed in the peripheral portion of the glass plate, the resin portion filling the opening or aperture, i.e., a portion of the resin holder constitutes an engaging portion to the peripheral wall of the opening or aperture. Accordingly, the coming-off of the resin holder from the glass plate can be prevented. Further, even in a case that the projection is formed in the peripheral portion of the glass plate, a portion of the resin holder constitutes an engaging portion to the peripheral surface of the projection. Accordingly, the coming-off of the resin holder from the glass plate can be prevented. Further, since the opening or aperture or the projection formed in the glass plate is engaged with the resin holder, a sufficient bonding strength between the glass plate and the resin holder can be assured even when a water-repellent treatment is conducted to the glass plate.

In the thus obtained window glass for an automobile, the resin holder can be fixed to the glass plate by injection-molding a resin material. Accordingly, a primer application process to the glass plate or a bonding process with use of an adhesive is unnecessary. Accordingly, a window glass for an automobile can be produced in a relatively short time. Further, since no adhesive is used, the glass plate can certainly be separated from the resin holder, and the glass plate can be effectively used as resources to be recycled. Namely, a state that no resin component is attached to the glass plate can easily be realized by deforming or destroying the resin holder to cancel an engaging state of the resin holder to the opening or aperture or the projection of the glass plate. Then, the glass plate from which the resin holder is removed is broken into appropriate pieces as the case requires, and glass pieces are put into a glass melting furnace for producing glass plates to regenerate glass.

In the present invention described above, it is preferable that a notch is formed in an upper end portion of the resin holder at a side facing the glass plate so that a space is formed between the surface of the glass plate and the resin holder at an upper end side of the resin holder in an elevating direction of the resin holder. The size of this notch is determined to be, for example, a size permitting insertion of the tip portion of a tool such as a screw driver.

The provision of the space between the surface of the glass plate and the upper end portion of the resin holder can realize the following treatment. When the tip of a tool such as a screw driver is inserted into the space and a force is applied to the screw driver so that the tip portion of the screw driver leaves from the surface of the glass plate, the resin holder is elastically deformed to show a state that the holder is separated from the surface of the glass plate. Namely, the resin holder is deformed so as to cancel an engaging state to the glass plate. Accordingly, when the exchange of the resin holder attached to a glass plate is desirable, the above-mentioned operation should be carried out, whereby the resin holder can be removed without breaking the glass plate. Thus, it is possible to repair the elevating device without breaking the glass plate if the elevating device is damaged. Further, when an automobile is to be scrapped, the resin portion can be separated from the glass plate without breaking the glass plate so as to recover the glass plate. The recovered glass plate can be broken into pieces of appropriate size if necessary, and the pieces can be regenerated by putting them into a glass melting furnace for producing glass sheets.

### BRIEF DESCRIPTION OF THE DRAWINGS

Fig. 1 is a perspective view showing the structure of the window glass for an automobile according to a first embodiment of the present invention.
Fig. 2 is a cross-sectional view showing the structure of the window glass for an automobile according to the first embodiment of the present invention.
Fig. 3 is a perspective view showing a modification of a resin holder in the first embodiment.
Fig. 4(a) is a cross-sectional view showing the structure of the window glass for an automobile according to a second embodiment of the present invention, and Fig. 4(b) is an illustration showing operations of removing the resin holder from the window glass for an automobile.
Fig. 5 is a perspective views showing the structure of the window glass for an automobile according to a third embodiment of the present invention.
Fig. 6 is a cross-sectional view showing the structure of the window glass for an automobile according to the third embodiment of the present invention.
Fig. 7 shows perspective views showing the structure of the window glass for an automobile according to a fourth embodiment of the present invention.
Fig. 8 is a cross-sectional view showing the structure of the window glass for an automobile according to the fourth embodiment of the present invention.
Fig. 9 is an illustration showing the structure of an elevating device for a window glass.
Fig. 10(a) is a diagram for explaining a strength test A and Fig. 10(b) is a diagram for explaining a strength test B.
Fig. 11 is a schematic plane view showing a glass plate in which a through hole is formed.
Fig. 12(a) is a graph showing a result (the relation between the strength and the aperture size) in the strength test A and Fig. 12(b) is a graph showing a result (the relation between the strength and the aperture size) in the strength test B.
Fig. 13(a) is a graph showing a result (the relation between the strength and the distance of (side edge to aperture)) in the strength test A and Fig. 13(b) is a graph showing a result between the strength and the distance of (side edge to aperture)) in the strength test B.
Fig. 14(a) is a graph showing a result (the relation between the strength and the area of a region S) in the strength test A and Fig. 14(b) is a graph showing a result (the relation between the strength and the area of the region S) in the strength test B.

### BEST MODE FOR CARRYING OUT THE INVENTION

In the following, several embodiments of the present invention will be described in detail with reference to drawing.

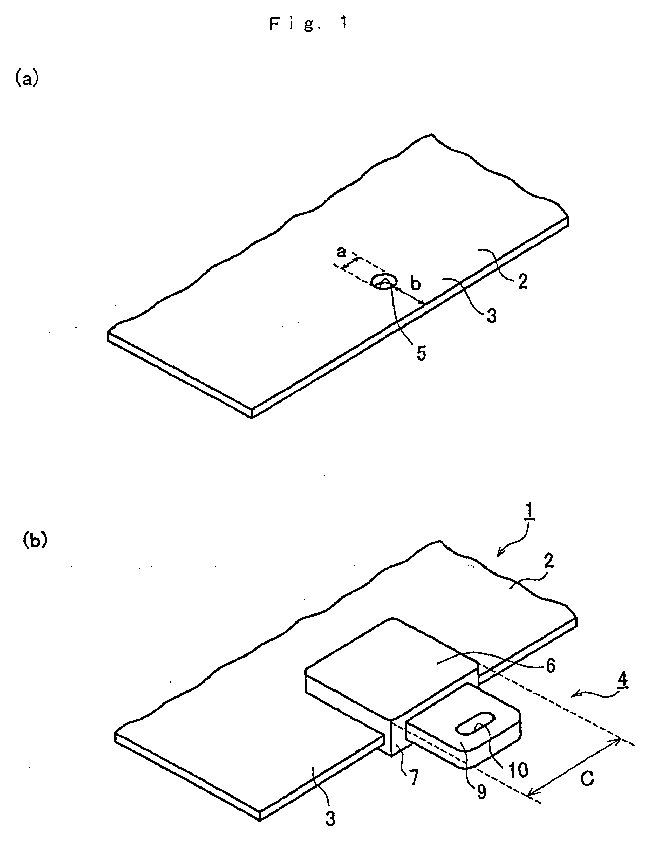

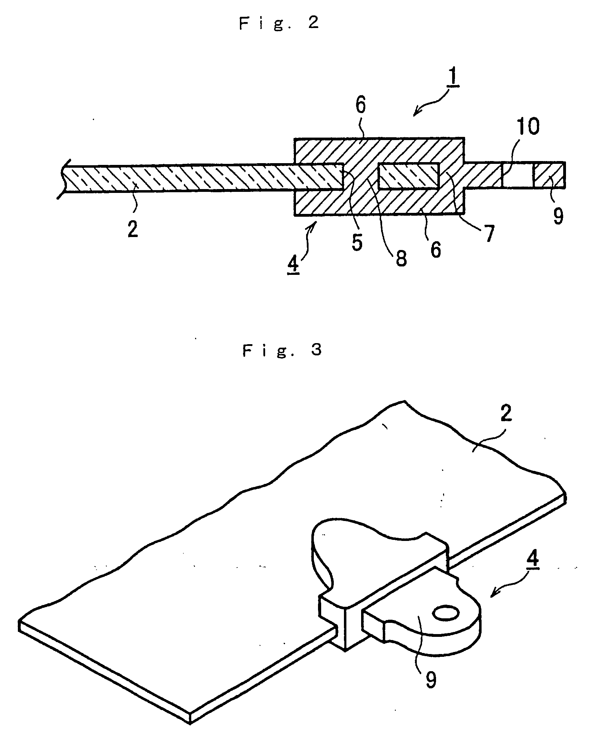

Fig. 1 is a perspective view showing the structure of the window glass 1 for an automobile according to a first embodiment of the present invention, and Fig. 2 is a cross-sectional view showing the structure of the window glass 1 for an automobile. Fig. 1(a) shows a state before a resin holder 4 is formed and Fig. 1(b) shows a state after the resin holder 4 is formed. The window glass 1 for an automobile comprises a glass plate 2 and a resin holder 4 formed in a peripheral portion 3 (a lower edge portion in an elevating direction) of the glass plate 2 as shown in Fig. 1(b).

The glass plate 2 is assembled in an automobile door. The glass plate 2 is elevated by, for example, an elevating device 40 as shown in Fig. 9. As shown in Fig. 1(a), a through hole 5 is formed in the peripheral portion 3 of the glass plate 2, at which the resin holder 4 is formed, so as to penetrate the glass plate 2.

The resin holder 4 is formed integrally with the peripheral portion 3 including the through hole 5 of the glass plate 2 by injection molding. The resin holder 4 comprises mainly two clamping portions 6 for supporting the glass plate 2 in a state that they clamp a peripheral edge portion of the glass plate 2, a connecting portion 7 formed along an outer periphery of the glass plate 2 to connect the two clamping portions 6, an engaging portion 8 formed to penetrate the through hole 5 of the glass plate 2 so as to connect the two clamping portions 6 and a mounting portion 9 expending from a lower face of the connecting portion 7 to be attached to an elevating rail 43 (Fig. 9). An aperture 10 is formed in the mounting portion 9 to permit the insertion of a fastening means such as a bolt. Two resin holders 4 are provided in a single glass plate 2 wherein the aperture 10 of one resin holder 4 is formed to have a round shape and the aperture 10 of the other resin holder 4 is formed to have an elongated shape.

The resin holder 4 is formed by disposing molding dies (not shown) having a cavity of predetermined shape so as to surround the through hole 5 of the glass plate 2; injecting a molten resin material such as polyacetal resin into the molding dies and curing the resin material by cooling.

By injection-molding the resin material, the resin material fills the through hole 5, and the resin holder 4 is formed in such a shape that the glass plate 2 is clamped by the clamping portions 6 and the connecting portion 7. Namely, the resin portion filling the through hole 5, i.e., the engaging portion 8 is engaged with the peripheral wall of the through hole 5. In particular, since the two clamping portions 6 are connected with the engaging portion 8, there is no possibility that the resin holder 4 comes off from the glass plate 2 unless the resin holder 4 is destroyed. Further, since the resin holder 4 is formed in such a state that the inner surface of the connecting portion 7 is in contact with a peripheral edge of the glass plate 2, there is no possibility that the resin holder rotates around the through hole 5 as the center.

In the window glass 1 for an automobile, the resin holder 4 can be fixed to the glass plate 2 without requiring other than the injection-molding of the resin holder 4 to the glass plate 2. Therefore, a primer application process and a bonding process with use of an adhesive are unnecessary. Accordingly, the window glass 1 for an automobile with the resin holder 4 can be produced in a relatively short time. Further, since no adhesive agent is used, the resin holder 4 can certainly be separated from the glass plate 2, and the glass plate 2 can effectively be used as resources to be recycled. In addition, since the resin holder 4 is fixed to the glass plate by being engaged with the peripheral wall of the through hole 5, there is no need to assure the bonding area as required in the conventional technique. Accordingly, the size of the resin holder 4 can be reduced, hence, the weight of the window glass for an automobile can be reduced as a whole. Further, since the resin holder 4 is formed by injection molding, the shape of the resin holder can be optional (for example, the shape shown in Fig. 3). Further, a notch 16 and/or a groove 18 may be formed in the resin holder 4 as described in the second embodiment which will be described Hereinbelow.

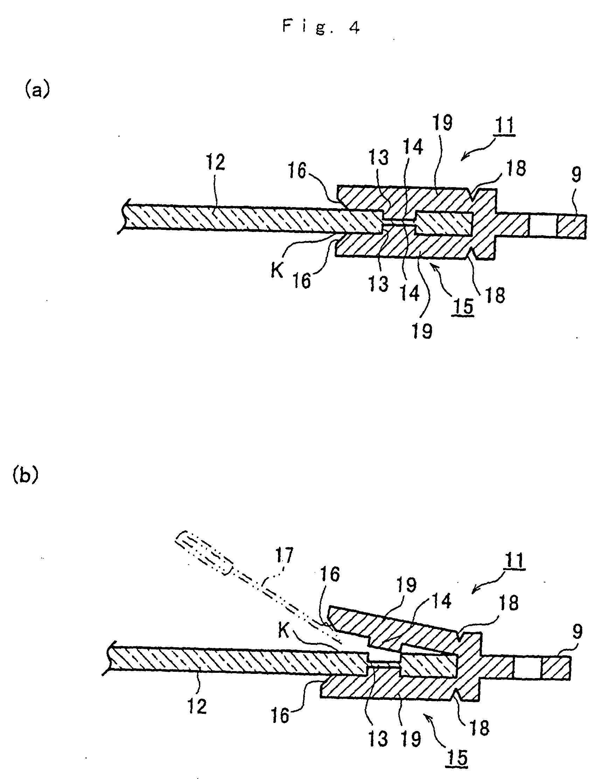

Next, the window glass 11 for an automobile according to the second embodiment of the present invention will be described with reference to Fig. 4.

Fig. 4(a) is a cross-sectional view showing the structure of the window glass 11 for an automobile, and Fig. 4(b) is an illustration showing operations to remove a resin holder 15. In this embodiment, the same reference numerals as in the first embodiment designate the same parts, and accordingly, description of these parts is omitted.

In the window glass 11 for an automobile, a recessed concave portion 13 is formed, instead of the through hole, in the glass plate 12. In Fig. 4(a), the concave portion 13 is formed in both surfaces of the glass plate 12. However, it may be formed only one surface when there is no problem of strength. The concave portion 13 corresponds to the opening referred to in the present invention.

A notch 16 is formed in an upper end portion of the resin holder 15 in an elevating direction at the position facing the glass plate 12. The presence of the notch 16 provides a space K between the surface of the glass plate 12 and the tip portion of the resin holder 15. The space K is determined to have a size which allows insertion of the tip end of a flat-ended screw driver 17. In an outer surface of the resin holder 15, in particular, at the position facing a surface of the glass plate 12, a groove 18 having a V-like shape in cross section is formed.

Thus, by forming the resin holder 15 integrally with the glass plate so that a portion of the resin holder 15 fills the concave portion 13, the resin holder 15 can be fixed to the glass plate 12. Namely, the coming-off of the resin holder 15 from the glass plate 12 can be prevented by the engagement of an engaging portion 14, formed in the concave portion 13, with the peripheral wall of the concave portion 13.

Further, in the window glass 11 for an automobile in this embodiment, since the space K is provided, the resin holder 15 can be removed from the glass plate 12 with use of the screw driver 17 as shown in Fig. 4(b). Specifically, by inserting the tip end of the screw driver 17 into the space K and applying a force to the screw driver 17 so that the tip portion of the screw driver 17 is apart from the surface of the glass plate 12, a clamping portion 19 of the resin holder 15 is deformed elastically to provide a state that the clamping portion 19 is apart from the surface of the glass plate 12.

In particular, the clamping portion 19 can be deformed elastically with a relatively weak operating force since a V-letter like groove 18 is formed in an outer surface of the claming portion 19, and the engaging portion 14 formed integrally with the clamping portion 19 can be drawn out from the concave portion 13. Thus, when clamping portions 19 at both sides are respectively deformed elastically to cancel the engaging condition to concave portions 13, the resin holder 15 can be drawn out from the glass plate 12 without breaking the glass plate 12.

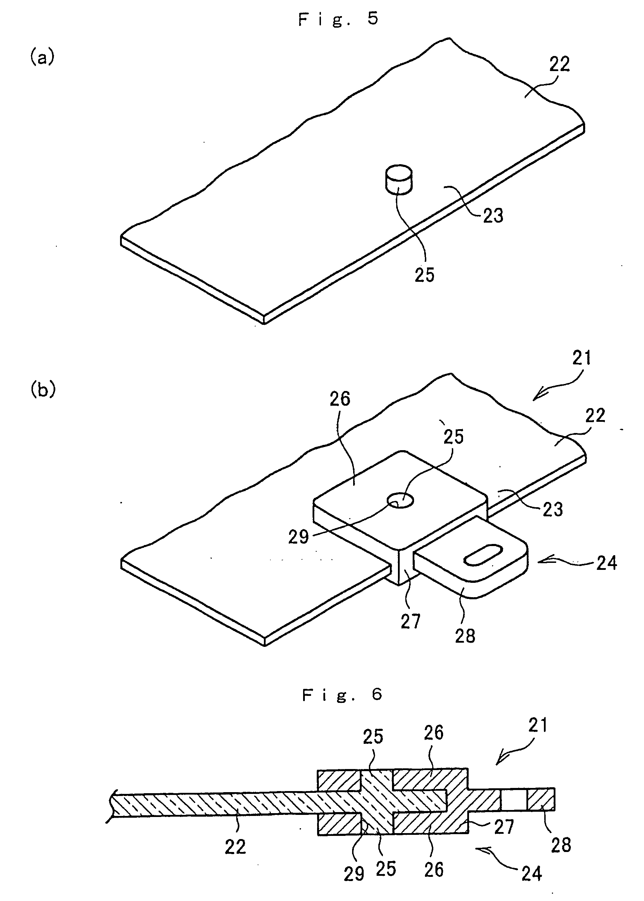

Next, the window glass 21 for an automobile according to the third embodiment of the present invention will be described with reference to Figs. 5 and 6. Fig. 5 is a perspective view showing the structure of the window glass 21 for an automobile and Fig. 6 is a cross-sectional view showing the structure of the window glass 21 for an automobile.

The window glass 21 for an automobile comprises a glass plate 22 and a resin holder 24 formed in a peripheral portion 23 of the glass plate 22 in the same manner as the first embodiment. The glass plate 22 is provided with a projection 25 projecting toward a front surface side. The diameter of the projection 25 is preferably about 5 to 10 mm. In this embodiment, the diameter of the projection 25 is determined to be 8 mm. In Fig. 5, the projection 25 is provided at both surfaces of the glass plate 22. However, it may be provided only one surface when there is no problem of strength.

The resin holder 24 is formed integrally with the glass plate 22 by injection molding. The resin holder 24 comprises mainly two clamping portions 26 for holding the glass plate 22 in a clamping state, a connecting portion 27 for connecting the two clamping portions 26 and a mounting portion 28 extending from a lower face of the connecting portion 27 and attached to an elevating rail 43. In each of the clamping portions 26, an engaging hole 29 is formed in the presence of the projections 25.

The resin holder 24 is formed by disposing molding dies (not shown) having a cavity of predetermined shape so as to surround the projections 25; injecting a molten resin material into the molding dies and curing the resin material by cooling. By injection-molding the resin material, the resin holder 24 is formed in such a state that the resin holder clamps the glass plate 22 and is engaged with the projections 25. Namely, the coming-off of the resin holder 24 from the glass plate 22 can be prevented in such state that the peripheral wall of engaging holes 29 formed in the resin holder 24 is engaged with the peripheral wall of the projections 25.

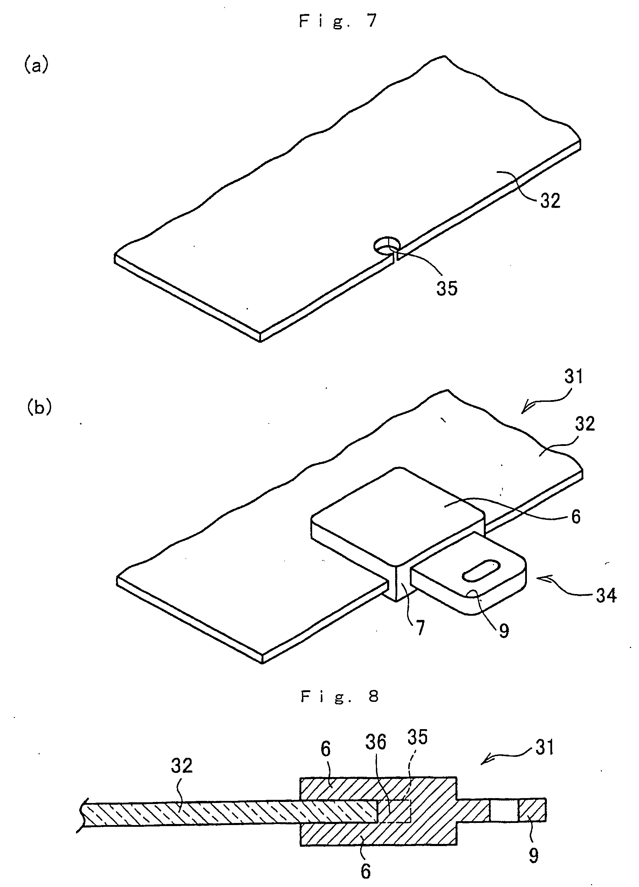

Next, the window glass 31 for an automobile according to the fourth embodiment of the present invention will be described with reference to Figs. 7 and 8. Fig. 7 is a perspective view showing the structure of the window glass 31 for an automobile, and Fig. 8 is a cross-sectional view showing the structure of the window glass 31 for an automobile. The same reference numerals designate the same parts in the first embodiment, and explanation of these parts is omitted.

A curved notch 35 is formed in a glass plate 32. A resin holder 34 can be fixed to the glass plate 32 by forming the resin holder integrally with the glass plate by injection molding at a peripheral portion of the glass plate 32 so that a portion of the resin holder 34 fills the notch 35. Namely, an engaging portion 36 formed in the cavity of the notch 35 is engaged with the peripheral wall of the curved notch 35, whereby the resin holder 34 is prevented from coming-off from the glass plate 32.

As described above, four preferable embodiments of the present invention have been explained. However, the present invention is not restricted to these embodiments but various improvements and design changes are possible as far as those are not deviated from the spirit of the present invention. For example, although the first embodiment shows that a single through hole 5 is formed in a single resin holder 4, two or more through holes may be formed. Further, although the through hole 5 is shown to have a circular shape, it may be such one having an elongated or polygonal shape. Further, the fourth embodiment shows the notch 35 which penetrates the glass plate 32. However, the notch may be a concave as in the second embodiment. A combination of the opening or aperture or the projection and the shape of the resin holder (for example, the notch 16 or the groove 18 in the second embodiment) is optional.

The glass plate used in the present invention may be of tempered glass, laminated glass, multi-layer glass formed by laminating a transparent resin layer on a single glass plate, organic glass composed of a transparent resin material or the like. The window glass for an automobile according to the present invention can be used together with various types of elevating device such as a wire type regulator or an arm type regulator as shown in Fig. 9.

It may be difficult to form the projection in the glass plate in the manufacturing process for the glass plate, as described in the third embodiment. Accordingly, it is preferable to form the opening or aperture in the glass plate as described in the first, second or fourth embodiment. In particular, it is preferable to form the through hole in the glass plate, as shown in Fig. 2, because the coming-off of the resin holder from the glass plate can be prevented due to the fact that the two clamping portions 6 are connected by the engaging portion 8. In the case of forming the through hole in the glass plate, it is preferable to form a concave portion in an outer surface of the resin holder at the position corresponding to the through hole of the glass plate. It is because the resin holder can easily be broken by inserting a tool such as a drill into the concave portion to remove the resin holder from the glass plate, whereby the glass plate can be recycled in order to save resources. In this case, the concave portion can be used as a target for inserting the tool, and insertion of the tool into the through hole of the glass plate can be easy, whereby there is little possibility of breaking the glass plate.

In forming the through hole in the glass plate, the diameter length (hereinbelow, it may be referred to simply as the aperture size, which is represented by "a") of the through hole in a direction substantially parallel to a side edge of the glass plate is preferably 2 to 10 mm, in particular, 3 to 8 mm (8 mm in the first embodiment). By determining "a" to be 2 mm, in particular, 3 mm or more, the coming-off of the resin holder from the glass plate can be prevented even when the resin holder is pulled in a direction separating from the glass plate in an elevating direction of the glass plate. When "a" is determined to be about 6 mm, there is little possibility that the resin holder comes off from the glass plate even when a pulling force of 3000N is applied thereto. It is particularly preferable that "a" is 2 mm or more because a force applied to the resin holder by the elevating device in the elevation of the glass plate is not more than 1000N. Contrary, when "a" is too large, the diameter length in a direction perpendicular to the side edge of the glass plate is inevitably large whereby it is necessary to increase the area for clamping the resin holder to the glass plate. Accordingly, the dimension of the glass plate becomes large, and the stroke for elevating the glass plate becomes small. Accordingly, it is preferable that "a" is 10 mm or less.

The length from the position of the through hole, which is the nearest to a side edge of the glass plate to the side edge of the glass plate (hereinbelow, it may be referred to simply as the distance from the side edge of the glass plate to the opening, which is represented by "b") is preferably thicker than the thickness of the glass plate but not more than 5 times as much as the thickness of the glass plate. When "b" is determined to be larger than the thickness of the glass plate, the breakage of the glass plate due to a resin pressure at the injection molding can be prevented. When "b" is too large, the diameter length in a direction perpendicular to the side edge of the glass plate is inevitably large, and it is necessary to increase the space for clamping the resin holder to the glass plate. Accordingly, the dimension of the glass plate becomes large, and the stroke for elevating the glass plate becomes small. Therefore, it is preferable that "b" is not more than 5 times as much as the thickness of the glass plate.

It is preferable that the length of a side portion (the connecting portion) (the length is referred to as "c") of the resin holder, which is in contact with the side edge of the glass plate, is 5 to 100 mm. When "c" is determined to be 5 mm or more, the area of contact between the side portion and the side edge of the glass plate can sufficiently be maintained, and the rotation of the resin holder around the through hole as a rotation axis can be prevented. In this case, it is preferable that the value of "c" is larger than the value of "a" from the viewpoints of the retention of the shape of the resin holder and the stability of molding in the injection molding.

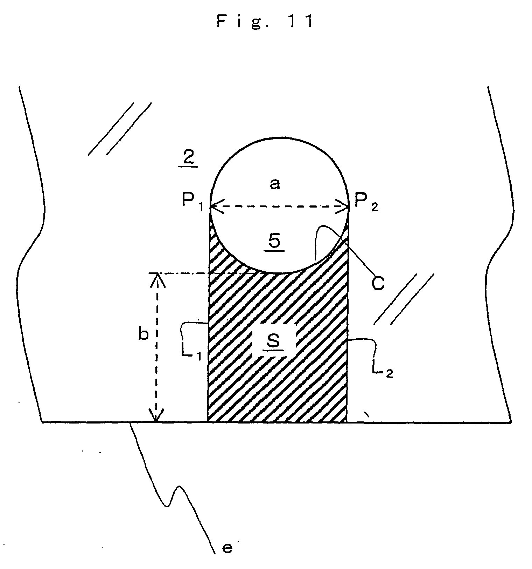

From the strength test results as shown in the following, it was found that when "a" or "b" had a larger value, the window glass indicated a high strength to a force (referred to as F_{A}, which will be described in detail in the following) produced when the resin holder was pulled in a direction parallel to the surface of the glass plate (the direction separating from the glass plate), and when "b" had a smaller value, the window glass indicated a high strength to a force (referred to as F_{B}, which will be described in detail in the following) produced when the resin holder was pushed in a direction perpendicular to the surface of the glass plate. It is supposed that these facts indicate that the region of the glass plate corresponding to a portion where the through hole is formed, i.e., at an outer periphery side in a direction along the surface of the glass plate from the through hole influences the strength against the force applied to the resin holder. Namely, it is preferable that the area s of a region S surrounded by vertical lines (L₁, L₂) extended from both ends (P₁, P₂) of the through hole 5 in a direction substantially parallel to a side edge e of the glass plate 2 to the side edge e, a peripheral edge C of the through hole 5 at a side edge e and the side edge e, is 20 to 180 mm², more preferably, 40 to 150 mm², particularly, 60 to 130 mm² (Fig. 11). When s is determined to be 20 mm² or more, particularly, 40 mm² or more, more particularly, 60 mm² or more, the strength of the window glass for an automobile to a force produced when the resin holder is pulled in direction parallel to the surface of the glass plate can be increased. When s is determined to be 180 mm² or less, particularly, 150 mm² or less, more particularly, 130 mm² or less, the strength of the window glass for an automobile to a force produced when the resin holder is pushed in a direction perpendicular to the surface of the glass plate can be increased. Preferred values of "a", "b", "c" and "s" have been described with respect to the embodiment wherein the through hole. is formed in the glass plate. By the same reason, it is preferable that the values of "a", "b", "c" and "s" have the above-mentioned values respectively with respect to the embodiments wherein the opening or the projection is formed in the glass plate.

The expression of "substantially" parallel to a side edge of the glass plate in this specification means as follows. Side edges of a glass plate for an automobile window generally have a curved line. The curvature of this curved line is small as negligible (the curvature radius is large) in comparison with the dimension of the through hole (for example, the curvature of the through hole). Accordingly, a side edge of the glass plate can be considered to have a substantially straight line (a finite straight line). Nevertheless, the term of "substantially" is used since the side edge of the glass plate is formed to have a curved line in a strict sense. Thus, since the side edge of the glass plate can be considered to be substantially straight, the term "substantially" as an adjunct is omitted with respect to the direction perpendicular to the side edge or the vertical line extended to the side edge.

With respect to the direction of a force applied to the resin holder, the expression of parallel to or perpendicular to the surface of the glass plate is used. Since a glass plate of window glass for an automobile is generally curved, it is difficult to establish universally the direction parallel to or perpendicular to the surface of the glass plate. In this specification, accordingly, the direction parallel to or perpendicular to the surface of the glass plate means the direction parallel to or perpendicular to the surface of the mounting portion (reference numeral 9 in Fig. 1) of the resin holder, which has a negligible degree of curve in comparison with the degree of curve of the surface of the glass plate.

Test results for verifying preferred values of the above-mentioned "a", "b" and "s" are described in the following.

### (Preparation of samples)

Glass plates with a resin holder having the shape as shown in Fig. 3, which was formed integrally therewith were prepared. The length (c) of the side portion (the connecting portion) of the resin holder, which was in contact with a side edge of the glass plates, was 30 mm. In the preparation, a peripheral portion of each glass plate was set in molding dies having a cavity corresponding to the shape of the resin holder, and a resin material of polyoxymethylene containing 25% of glass fibers was injected into the cavity followed by curing. The glass plates used were flat plate type glass plates each having dimensions of 500 (mm) × 600 (mm) and a thickness of 3.5 mm. In each glass plate, a through hole as indicated in Table 1 was formed. In Table 1, "a" (mm) indicates the diameter length of the through hole in a direction substantially parallel to the side edge of the glass plate, and "b" (mm) indicates the length from the position of the through hole which is the nearest to the side edge of the glass plate to the side edge of the glass plate.

### (Test procedure)

Two strength tests A and B were conducted to the prepared samples respectively. The strength test A is as follows. Each glass plate is supported by a supporting tool 81 in a vertical direction with the resin holder 4 being directed upside, by fixing a peripheral portion of the glass plate, which is at the side opposite to the side where the resin holder 4 is formed integrally. A hook 82 is inserted into the aperture 10 formed in the mounting portion 9. A pulling force is applied to a load cell 80 connected to the hook 82 in a direction along the surface of the glass plate 2 and perpendicular to the side edge covered with the resin holder 4. The magnitude F_{A} (N) of the pulling force produced when the glass plate 2 is broken by the pulling force is measured by the load cell 80 to obtain a result of the strength test A.

The strength test B is as follows. The glass plate 2 is placed on a supporting table 83 so that the surface of the glass plate 2 is supported horizontally. A portion of the glass plate 2, in the vicinity of the resin holder 4, is clamped together with the supporting surface of the supporting table 83 with a clamping member 84a and a clamping member 84b so as to be fixed. A load cell 80 is brought to contact with the mounting portion 9 aiming the aperture 10 as a target, and a pushing force is applied thereto by the load cell 80 in a direction perpendicular to the surface of the glass plate 2. The magnitude F_{B} (N) of the pushing force produced when the glass plate 2 is broken by the pushing force is measured by the load cell 80 to obtain a result of the strength test B.

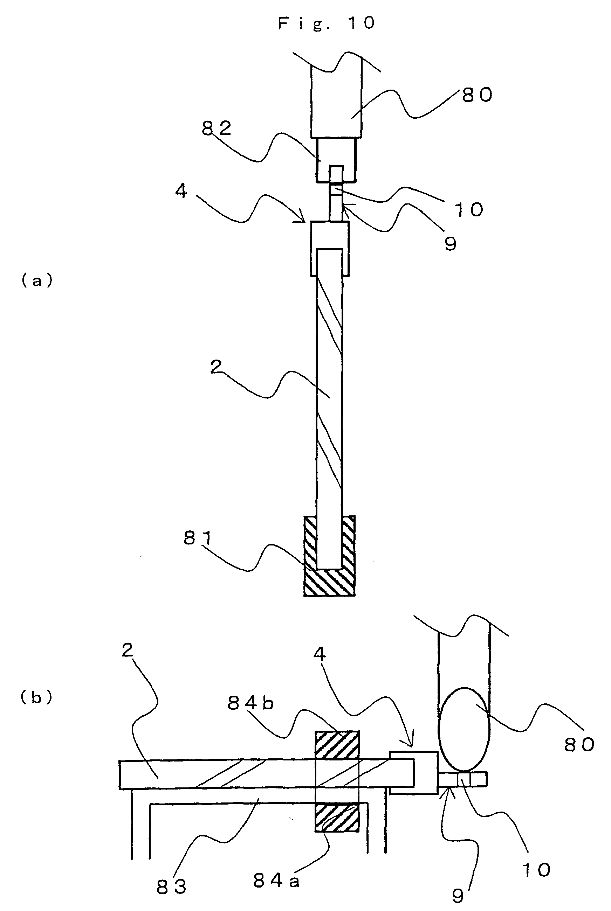

In the strength test A, 5 glass plates each having the resin holder formed integrally were prepared and measurement of strength was conducted to glass plates respectively. In the strength test B, 10 glass plates with the resin holder formed integrally were prepared and measurement of the strength was conducted respectively. Table 1 shows results of these measurements. In Table, F_{A} (unit: N) indicates results of the strength test A (an averaged value of 5 glass plates) and F_{B} (unit: N) indicates results of the strength test B (an averaged value of 10 glass plates). Each strength test was carried out under ordinary temperature and moisture. The condition of the strength test A is shown in Fig. 10(a) and the condition of the strength test B is shown in Fig. 10(b).

**Table 1**

| | a (mm) | b (mm) | s (mm²) | F_{A} (N) | F_{B} (N) |
|---|---|---|---|---|---|
| Ex. 1 | 6.8 | 11 | 80 | 2785 | 817 |
| Ex. 2 | 6.8 | 13 | 93 | 2857 | 810 |
| Ex. 3 | 6.8 | 15 | 107 | 2913 | 724 |
| Ex. 4 | 7.8 | 11 | 92 | 3161 | 824 |
| Ex. 5 | 7.8 | 13 | 108 | 3204 | 756 |
| Ex. 6 | 7.8 | 15 | 124 | 3468 | 650 |
| Ex. 7 | 8.8 | 13 | 123 | 3350 | 670 |

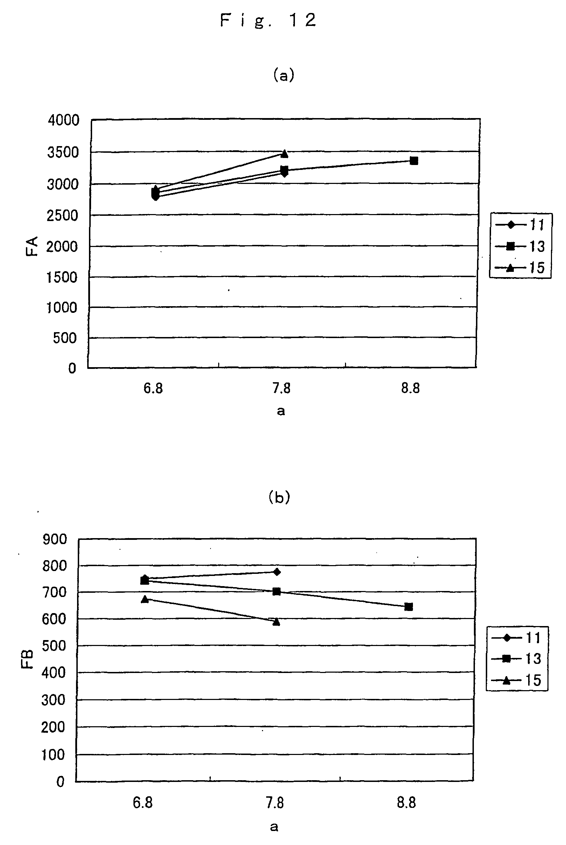

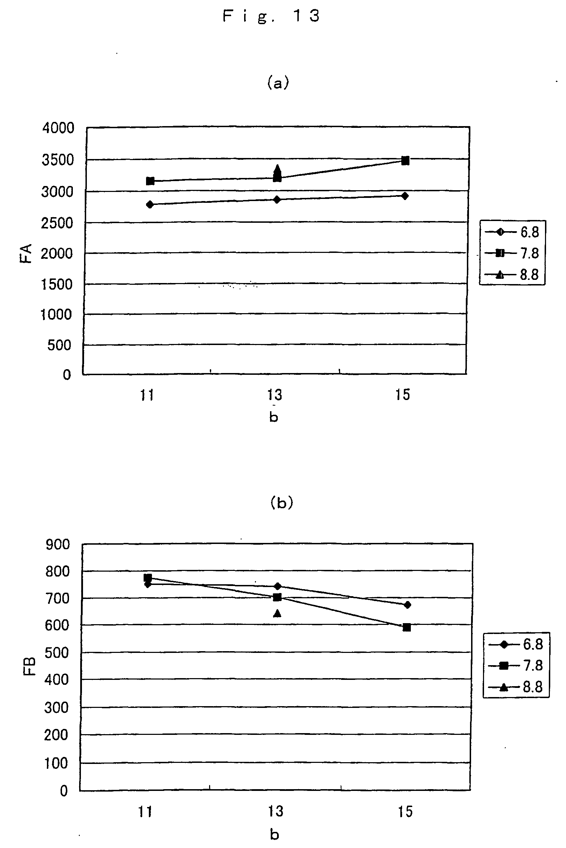

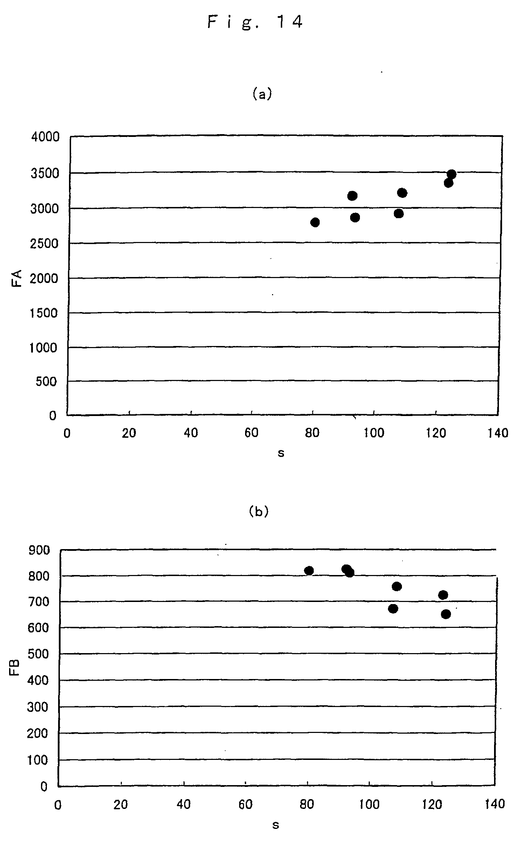

The results shown in Table 1 and the graphs shown in Figs. 12 to 14 indicate the following fact. In Fig. 12(a), the ordinate represents the averaged value F_{A} (unit: N) of measurement results of forces in the strength test A and the abscissa represents the aperture size a (unit: mm). In Fig. 12(b), the ordinate represents the averaged value F_{B} (unit: N) of the measurement results of forces in the strength test B and the abscissa represents the aperture size a (unit: mm). In Fig. 13(a), the ordinate represents the averaged value F_{A} (unit: N) of the measurement results of forces in the strength test A, and b (unit: mm) represents the distance from the side edge of the glass plate to the opening. In Fig. 13(b), the ordinate represents the averaged value F_{B} (unit: N) of the measurement results of forces in the strength test B, and b (unit: mm) represents the distance from the glass plate to the opening. In Fig. 14(a), the ordinate represents the averaged value F_{A} (unit: N) of the measurement results of forces in the strength test A, and the abscissa represents the area s (unit: mm²) of the region S. In Fig. 14(b), the ordinate represents the averaged value F_{B} (unit: N) of the measurement results of forces in the strength test B and the abscissa represents the area s (unit: mm²) of the region S.

As shown in Fig. 12(a), it is found that as the aperture size is large, it is possible to obtain a reaction to a force of pulling the resin holder in a direction parallel to the surface of the glass plate (the direction separating from the glass plate). As shown in Fig. 12(b), it is found that as the aperture size is small, it is possible to obtain a reaction to a pushing force from a direction perpendicular to the surface of the glass plate.

Specifically, when the aperture size is determined to be 6.8 mm or more under the condition that the distance from the side edge of the glass plate to the opening is 11 to 15 mm, there is no possibility that the resin holder comes off from the glass plate even though the resin holder is pulled in a direction parallel to the surface of the glass plate with a force of 2500N or more, and the breakage of the glass plate or the resin holder can be prevented. Further, when the aperture size is to be 2 mm or more, there can be considered that the resin holder does not come off from the glass plate even though the resin holder is pulled with a force of about 1000N which would be applied in the elevation of the window glass for an automobile.

Further, when the aperture size is determined to be 8.8 mm or less under the condition that the distance from the side edge of the glass plate to the opening is 11 to 15 mm, the breakage of the glass plate or the resin holder can be prevented even though the resin holder is pushed in a direction perpendicular to the surface of the glass plate with a force of 500N or more. Further, when the aperture size is to be 10 mm or less under the condition that the distance from the side edge of the glass plate to the opening is 13 mm or less, there can be considered that the breakage of the glass plate or the resin holder can be prevented even though the resin holder is pushed in a direction perpendicular to the surface of the glass plate with a force of 500N or more.

As shown in Fig. 13(a), it is found that as the distance from the side edge of the glass plate to the opening is large, it is possible to obtain a reaction to a force pulling the resin holder in a direction parallel to the surface of the glass plate (the direction separating from the glass plate). As shown in Fig. 13(b), it is found that as the distance from the side edge of the glass plate to the opening is small, it is possible to obtain a reaction to a pushing force in a direction perpendicular to the surface of the glass plate.

Specifically, when the distance from the side edge of the glass plate to the opening is determined to be 11 mm or more under the condition that the aperture size is 6.8 to 8.8 mm, there is little possibility that the resin holder comes off from the glass plate even though the resin holder is pulled in a direction parallel to the surface of the glass plate with a force of 2500N or more, and the breakage of the glass plate or the resin holder can be prevented.

Further, when the distance from the side edge of the glass plate to the opening is to be 15 mm or less under the condition that the aperture size is 6.8 to 8.8 mm, the breakage of the glass plate or the resin holder can be prevented even though the resin holder is pushed in a direction perpendicular to the surface of the glass plate with a force of 500N or more. Further, when the distance from the side edge of the glass plate to the opening is determined to be not more than 5 times as much as the thickness of the glass plate (=17.5 mm or less: the thickness of the glass plate in this test is 3.5 mm) under the condition that the aperture size is about 6.8 mm, there can be considered that the breakage of the glass plate or the resin holder can be prevented even though the resin holder is pushed in a direction perpendicular to the surface of the glass plate with a force of 500N or more.

As shown in Fig. 14(a), it is found that as the area of the region S is large, it is possible to obtain a reaction to a force of pulling the resin holder in a direction parallel to the surface of the glass plate (the direction separating from the glass plate). As shown in Fig. 14(b), it is found that as the region S is small, it is possible to obtain a reaction to a pushing force in a direction perpendicular to the surface of the glass plate.

Specifically, when the area of the region S is determined to be 80 mm² or more, there is little possibility that the resin holder comes off from the glass plate even though the resin holder is pulled in a direction parallel to the surface of the glass plate with a force of 2500N or more, and the breakage of the glass plate or the resin holder can be prevented. Further, there can be considered that even though the resin holder is pulled in a direction parallel to the surface of the glass plate with a force of 2000N or more when the area of the region S is 20 mm² or more, or with a force of 2500N or more when the area of the region S is 40 mm² or more respectively, there is little possibility that the resin holder comes off from the glass plate, and the breakage of the glass plate or the resin holder can be prevented.

Further, when the area of the region S is determined to be 125 mm² or less, the breakage of the glass plate or the resin holder can be prevented even though the resin holder is pushed in a direction perpendicular to the surface of the glass plate with a force of 600N or more. In addition, there can be considered that the breakage of the glass plate or the resin holder can be prevented even though the resin holder is pushed in a direction perpendicular to the surface of the glass plate with a force of 500N or more when the area of the region S is 180 mm² or less, or with a force of 600N or more when the area of the region S is 150 mm² or less respectively.

### INDUSTRIAL APPLICABILITY

According to the present invention described above, a primer application process or a bonding process with use of an adhesive is unnecessary since the resin holder is formed integrally with the glass plate having an opening or aperture, or a projection by injection-molding a resin material. Accordingly, it is possible to produce a window glass for an automobile having the resin holder in a relatively short time. In this case, the breakage of the glass plate or the resin holder in use for an automobile window can be prevented by forming the opening, aperture or the projection in the glass plate at a predetermined position or with a predetermined shape. Further, the size of the resin holder can be reduced whereby the weight of the window glass for an automobile can be reduced as a whole.

In particular, since an engaging state is provided between the opening or aperture or the projection of the glass plate and the resin holder, the application of an adhesive to the glass plate or the resin holder can be eliminated. Accordingly, the resin holder can certainly be separated from the glass plate, and a resin component adhering on the glass plate after the resin holder is removed can be minimized. Then, the glass plate from which the resin holder is removed can be put in a glass melting furnace after the glass plate is broken into pieces of appropriate size. Thus, the glass plate for an automobile window can effectively be utilized as recycled resources and can be regenerated as glass.

## Claims

1. A window glass for an automobile comprising a glass plate for an automobile and a resin holder for connecting the glass plate to an elevating device for elevating the glass plate wherein the glass plate is capable of being elevated by means of the elevating device, the window glass for an automobile being **characterized in that**:
an opening or aperture is formed in a peripheral portion of the glass plate and the resin holder is formed integrally with the peripheral portion including the opening or aperture of the glass plate by injection molding.

2. A window glass for an automobile comprising a glass plate for an automobile and a resin holder for connecting the glass plate to an elevating device for elevating the glass plate wherein the glass plate is capable of being elevated by means of the elevating device, the window glass for an automobile being **characterized in that**:
a projection is formed in a peripheral portion of at least one of glass plate surfaces and the resin holder is formed integrally with the peripheral portion including the projection of the glass plate by injection molding.

3. The window glass for an automobile according to Claim 1, wherein the diameter length of the opening or aperture in a direction substantially parallel to a side edge of the glass plate is 2 to 10 mm.

4. The window glass for an automobile according to Claim 1 or 3, wherein the length from the position of the opening or aperture, which is the nearest to a side edge of the glass plate, to the side edge of the glass plate is not more than 5 times as much as the thickness of the glass plate.

5. The window glass for an automobile according to Claim 1 or 3, wherein the length from the position of the opening or aperture, which is the nearest to a side edge of the glass plate, to the side edge of the glass plate is 5 to 20 mm.

6. The window glass for an automobile according to Claim 1, 3, 4 or 5, wherein the length of a side portion of the resin holder, which is in contact with a side edge of the glass plate is 5 to 100 mm and is longer than the diameter length of the opening or aperture in a direction substantially parallel to the side edge of the glass plate.

7. The window glass for an automobile according to Claim 1, 3, 4, 5 or 6, wherein the area of a region surrounded by vertical lines extended from both ends of the opening or aperture in a direction substantially parallel to a side edge of the glass plate, a peripheral edge, at a side of the side edge of the glass plate, of the opening or aperture and the side edge of the glass plate is 20 to 180 mm².

8. The window glass for an automobile according to Claim 1, 2, 3, 4, 5, 6 or 7, wherein a notch is formed in an upper end portion of the resin holder at a side facing the glass plate so that a space is formed between the surface of the glass plate and the resin holder at an upper end side of the resin holder in an elevating direction of resin holder.

9. A recycling method for glass which comprises deforming or destroying a resin holder formed on the glass plate for an automobile described in Claims 1, 2, 3, 4, 5, 6, 7 or 8 to cancel an engaging state to the glass plate, removing the resin holder from the glass plate, and putting the glass plate, from which the resin holder is removed, into a glass melting furnace to regenerate glass.

10. A recycling method for glass which comprises inserting a tool into a space formed between the surface of the glass plate and a resin holder of the window glass for an automobile described in Claim 8, deforming or destroying the resin holder to cancel an engaging state to the glass plate, removing the resin holder from the glass plate, and putting the glass plate, from which the resin holder is removed, into a glass melting furnace to regenerate glass.
